# EUROPÄISCHE PATENTSCHRIFT

(11) **EP 1 857 245 B1**
(45) Veröffentlichungstag und Bekanntmachung des Hinweises auf die Patenterteilung: **26.01.2011**
(21) Anmeldenummer: 07106456.2
(22) Anmeldetag: 18.04.2007
(51) Int. Cl.: B29C 33/18, B29C 33/30, B29C 44/12, B29C 44/14

(54) **Abdichtbares Formwerkzeug**
Sealable moulding tool
Outil de formage pouvant être étanchéifié

(30) Priorität: 09.05.2006 DE 102006021407
(43) Veröffentlichungstag der Anmeldung: 21.11.2007
(73) Patentinhaber: KraussMaffei Technologies GmbH, 80997 München (DE)
(72) Erfinder: JANOTTA, Rainer, 49143, Bissendorf (DE)
(74) Vertreter: Zollner, Richard

(56) Entgegenhaltungen:
- DE-C1- 19 535 594
- DE-U1- 20 021 270

## Beschreibung

Die vorliegende Erfindung betrifft ein abdichtbares Formwerkzeug gemäß dem Oberbegriff des Patentanspruchs 1.

Bei der Herstellung von geschäumten Kunststoffprodukten, insbesondere von Kunststoffverbundteilen, wie Sandwich-Kunststoffprodukten, beispielsweise mit einem Polyurethan-Kern, werden bei einem Herstellungsprozess oftmals eine Haut oder ein Einlegerteil in eine Kavität eines Formwerkzeugs eingelegt und nachfolgend ein Duroplast-Material, beispielsweise ein Polyurethan-Material, in die Kavität eingefüllt. Bei der Verwendung eines eine Außenhaut bildendes Einlegerteils sowie zusätzlich einer beispielsweise die Innenoberfläche bildenden Haut wird oftmals der Zwischenraum zwischen diesen beiden Teilen mit einem Polyurethan-Material ausgeschäumt. Das Einlegerteil kann aus den unterschiedlichsten Materialien, wie einer tiefgezogenen Folie, einer Haut, einem Aluminiumblech etc. bestehen. Das Schaummaterial ist vorzugsweise ein Polyurethan-Material, welches duroplastisch oder thermoplastisch aushärtet.

Beim Befüllen des Kavitätsraums gilt es sicherzustellen, dass im Randbereich zwischen zwei Formwerkzeugteilen oder Formwerkzeughälften kein Füllmaterial, insbesondere Schaummaterial, an die Umgebung austritt. Insbesondere sollte kein Schaummaterial zwischen einem Einleger und einer Haut oder zwischen einem Einleger bzw. einer Haut und einer Formhälfte austreten können. Zu diesem Zweck sollte eine Abdichtung die Kavität umlaufend vorgesehen sein, die ein solches Austreten von Schaummaterial verhindert.

Dabei ist es beispielsweise bekannt, den Einleger und/oder die Haut zumindest im Randbereich der Kavität während des Injektionsvorgangs so fest dichtend aneinander oder an eine Formhälftenwand zu drücken, dass auch beim Einspritzen des Füllmaterials mit einem bestimmten Druck kein Schaummaterial austreten kann.

Als Dichtvorrichtungen können dabei aufblasbare Dichtschläuche verwenden werden, die trennflächenseitig in einer zugeordneten Ausnehmung (Nut) einer Formhälfte eingelegt sind, wobei durch Andrücken des Dichtschlauches in Richtung der gegenüberliegenden Formhälfte die Kavität dicht abgeschlossen und eine Abdichtung auch zwischen einer Haut bzw. einem Einleger herbeigeführt wird. Solche Dichtschläuche sind vorzugsweise aufblasbar, so dass der Grad der Abdichtung durch einen angelegten Luftdruck bestimmt werden kann.

Bei der Verwendung eines Einlegerteils oder einer Haut ist es oftmals wünschenswert, dieses oder diese genau in der Kavität eines Formwerkzeugs zu positionieren. Zur Erreichung dieses Ziels wird oftmals eine Vakuumeinrichtung eingesetzt, welche die Haut oder das Einlegerteil gegen eine Formhälfte anzieht und so insgesamt fixiert. Um das Vakuum dimensionsmäßig zu begrenzen, wird oftmals eine Vakuum-Nut, welche die Kavität zumindest teilweise umläuft, zumindest in eine der Formhälften eingebracht.

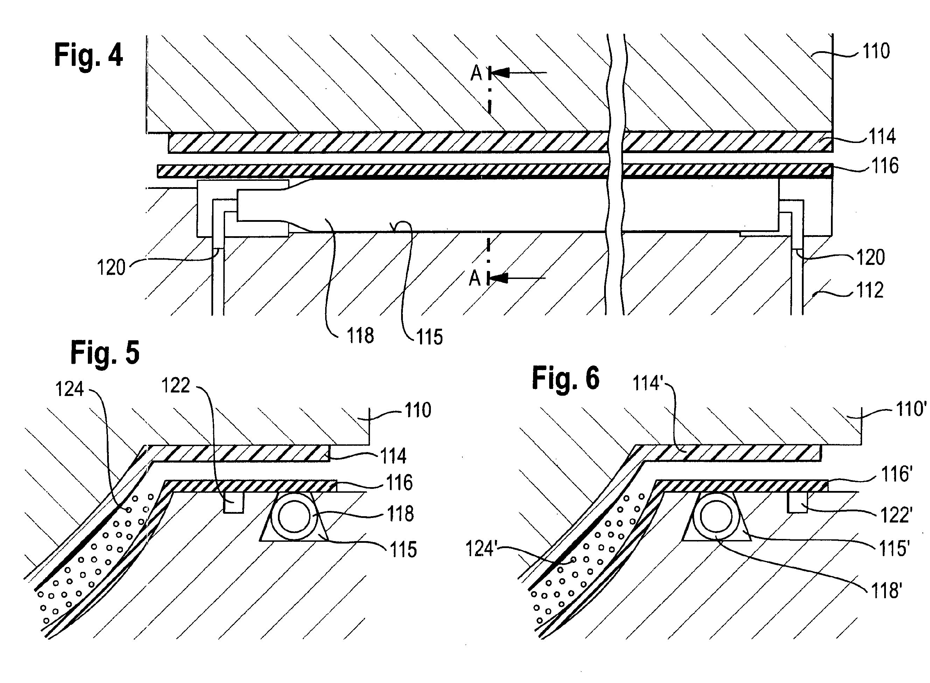

Eine Ausführungsform, wie im Stand der Technik bekannt, ist in den Figuren 4 bis 6 dargestellt. In dem schematischen Schnittbild der Figur 4 sind zwei Formhälften 110 und 112 zu erkennen, zwischen denen schematisch im Schnitt dargestellt ein aus einer Kunststofffolie bestehendes Einlegerteil 114 und eine Haut 116 angeordnet sind. Zwischen dem Einlegerteil 114 und der Haut 116 soll nun in einer Kavität (vgl. auch Figuren 5 und 6) ein Schaummaterial aus Polyurethan eingefüllt werden. Zur Abdichtung zwischen dem Einlegerteil 114 und der Haut 116 ist ein Dichtschlauch, die Kavität zumindest im Wesentlichen umlaufend, in einer entsprechenden Nut 115 aufgenommen. Dabei kann die Kavität durch eine Mehrzahl von Dichtschläuchen, die jeweils ein Segment der Gesamtdichtung darstellen, umgeben sein. Jeder Dichtschlauch 118 ist mit einem Anschluss 120 versehen, durch die dem Dichtschlauch 118 Luft unter Druck zugeführt werden kann, so dass er aufgeblasen werden kann. Durch das Aufblasen kann man die Intensität bestimmen, mit der die Haut 116 im geschlossenen Zustand des Formwerkzeugs gegen das Einlegerteil 114 gedrückt werden kann.

In den Figuren 5 und 6, die jeweils einen Schnitt entlang Linie A-A aus Figur 5 zeigen, sind zwei alternative Ausführungsformen dargestellt, die sich dadurch unterscheiden, dass eine Vakuum-Nut 122 bzw. 122' entweder radial innerhalb (Figur 5) oder radial außerhalb (Figur 6) zur Dichteinrichtung gesehen angeordnet sind. Dabei bezeichnen die in Figur 6 mit Strich versehenen Bezugsziffern die entsprechenden Teile der Figuren 4 und 5.

Nachteilig bei dieser Anordnung ist, dass durch die getrennte Ausbildung von Vakuum-Nut und Dichtschlauch der Hautauslauf oder Hautrand breit ausgebildet sein muss. Dies führt zu erhöhten Materialkosten, was sich stückkostenmäßig insgesamt nachteilig auswirkt.

Um diesen Nachteil zu umgehen ist in der DE 200 21 270 U1 ein gattungsgemäßes Formwerkzeug zum Herstellen von Formteilen angegeben, gemäß dem Oberbegriff des Anspruchs 1, bei der eine Vakuumnut in der Nut für die aufblasbare Dichtung integriert ausgebildet ist. Mit einer solch kombinierten Nut soll es möglich sein, den Abfallbereich gering zu halten. Allerdings ist die Fixierung der Haut nicht immer sichergestellt, da durch sich das angelegte Vakuum eine Anlagerung der aufblasbaren Dichtung an die Wandungen ergeben kann, wodurch eine wirkungsvolle Festlegung der Haut mittels des Vakuums verhindert wird.

Ein Werkzeug zum Hinterschäumen von Folien ist überdies aus der DE 195 35 594 bekannt. Bei der darin beschriebenen Ausführungsform ist eine Dichtung in einen nach oben offenen Kanal einer Werkzeughälfte eingesetzt. In der Dichtung sind beabstandet zueinander Öffnungen angeordnet, mit welcher ein Unterdruck an eine eingelegte Lederhaut aufgebracht werden kann, um diese zu halten.

Aufgabe der vorliegenden Erfindung ist es daher, eine funktionsfähige Vorrichtung der vorgenannten Art anzugeben.

Diese Aufgabe wird durch die im Anspruch 1 genannten Merkmale gelöst.

Ein Kerngedanke der vorliegenden Erfindung ist darin zu sehen, dass Mittel vorgesehen sind, um die Vakuumeinrichtung, die zum Fixieren des Einlegerteils oder der Haut integral mit der Dichteinrichtung ausgebildet ist, auch während der Erzeugung des Vakuums funktionsfähig arbeiten zu lassen. Dies wird dadurch erreicht, dass die Ausgestaltung des Dichtschlauchs bzw. der Mittel zur Beabstandung der Dichteinrichtung von der Nutwand so gewählt wird, dass trotz dem Erzeugen des Vakuums im Spalt unter zusätzlichem Aufblasen des Dichtschlauchs der Spalt zwischen Schlauch und Nutwand fortwährend ausgebildet bleibt. Damit wird sichergestellt, dass die durch das Vakuum erzeugte Haltewirkung auf die Haut kontinuierlich bestehen bleibt.

Typischerweise ist die Dichteinrichtung, beispielsweise der Dichtschlauch, in einer Nut einer der Formhälften aufgenommen. Bei einer solchen Ausführungsform ist zwischen der Nutwand und der Dichteinrichtung der Spalt ausgebildet, durch den ein Vakuum auf die Haut generierbar ist. Das Vakuum kann beispielsweise dadurch erzeugbar sein, dass dieser Raum über einen Anschluss mittels einer Vakuumpumpe evakuiert wird. Dabei ist darauf zu achten, dass die Dichteinrichtung, insbesondere der Dichtschlauch sich während der Haltephase aufgrund des Vakuums nicht bis zur Nutwand ausdehnt, so dass der Spalt zur Ausbildung des Vakuums verschwindet. Hierbei ist zu berücksichtigen, dass die Wirkung des Vakuums hinsichtlich einer Verkleinerung des Spaltes durch das Aufblasen des Dichtschlauches noch unterstützt wird. Zur Aufrechterhaltung des Spaltes können Mittel, beispielsweise Abstandshalterungen vorgesehen sein, um die Dichteinrichtung, insbesondere den Dichtschlauch, von der entsprechenden Nutwand beabstandet bzw. entfernt zu halten. Natürlich kann auch die Dichteinrichtung, insbesondere der Dichtschlauch so ausgebildet sein, dass er trotz des Aufblasens und der Ausdehnung sich auch bei Anlegen des Vakuums nicht radial zum Spalt hin ausdehnt. Der Dichtschlauch kann insbesondere derart ausgeführt sein, dass er sich im wesentlichen nur in Richtung der anderen Formhälfte ausdehnt. Dafür eignen sich beispielsweise Dichtschläuche aus vulkanisiertem Material.

Überdies kann man durch die Vermeidung von zwei separaten und parallel zueinander angeordneten Einrichtungen für die Fixierung des Einlegerteils sowie die Abdichtung das Einlegerteil oder die Haut im Randbereich signifikant kürzer ausgestalten, was zu einer Kosteneinsparung bei der Herstellung eines Bauteils führt.

Die Dichteinrichtung sollte dabei die Kavität im Wesentlichen vollständig umgeben, zumindest in den Bereichen, an denen ein Austritt aufgrund der entsprechenden Druckverhältnisse zu erwarten ist.

Die Dichteinrichtungen oder Dichtschläuche können dabei vorkonfektioniert sein, so dass speziell ausgebildete Endstücke entfallen. Überdies sind vorkonfektionierte Dichtungen besonders kostengünstig herzustellen und bieten somit einen Preisvorteil.

Für die Dichteinrichtung bzw. den Dichtschlauch kann ein Material ausgesucht werden, welches eine erheblich höhere Standzeit als herkömmliche extrudierte Dichtungen besitzt. Solche Materialien sind aus dem medizinischen Bereich bereits bekannt.

Die vorliegende Erfindung soll nachfolgend anhand eines Ausführungsbeispiels und mit Bezug auf die beiliegenden Zeichnungen näher erläutert werden. Die Zeichnungen zeigen in
- Figur 1: eine schematische Detailschnittdarstellung durch ein Formwerkzeug mit erfindungsgemäß ausgebildeter Dicht- und Vakuumeinrichtung,
- Figur 2: eine schematische Detailschnittdarstellung entlang Linie A-A aus Figur 1,
- Figur 3: eine schematische Darstellung eines Ausschnitts einer Draufsicht auf die Dicht- und Vakuumeinrichtung gemäß der vorliegenden Erfindung,

- Figur 4: eine schematische Detailschnittdarstellung durch ein Formwerkzeug mit einer Dicht- und Vakuumeinrichtung nach dem Stand der Technik,
- Figur 5: eine schematische Schnittdarstellung entlang Linie A-A aus Fig. 4 gemäß einer ersten Alternative und
- Figur 6: eine schematische Schnittdarstellung entlang Linie A-A aus Fig. 4 gemäß einer zweiten Alternative.

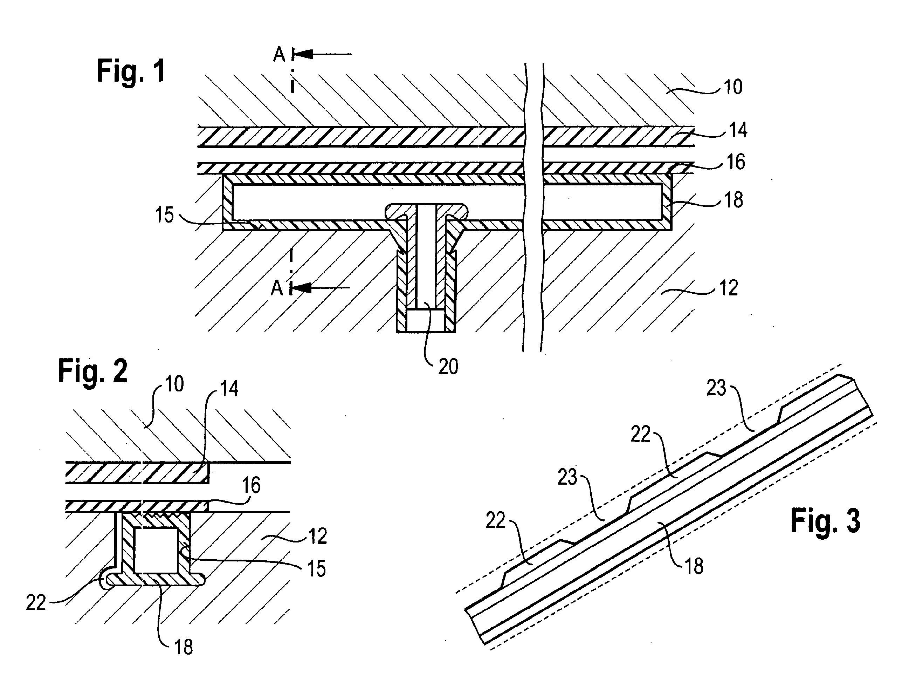

In den Figuren 1 bis 3 ist ein spezielles Ausführungsbeispiel für die vorliegende Erfindung dargestellt. Dieses Ausführungsbeispiel soll jedoch nicht einschränkend verstanden werden. Vielmehr kann die vorliegende Erfindung auch in anderer Weise ausgestaltet sein.

Wie einleitend bereits zum Stand der Technik beschrieben wurde, ist auch bei der vorliegenden Ausführungsform ein Formwerkzeug vorgesehen, welches zwei Formhälften, nämlich eine erste Formwerkzeughälfte 10 und eine zweite Formwerkzeughälfte 12 umfasst. Die beiden Formwerkzeughälften 10, 12 können zur Ausbildung einer Kavität verschlossen werden, wobei die entsprechende Vorrichtung hierfür nicht im Einzelnen dargestellt ist. Entsprechende Formträger oder selbsttragende Werkzeugformen sind aus dem Stand der Technik jedoch bekannt.

Ist nach einem Injektionsvorgang (wie nachfolgend noch beschrieben wird) ein Produkt in der Kavität ausgebildet worden, können die beiden Formhälften geöffnet und das Produkt entnommen werden.

In Figur 1 ist der geschlossene Zustand des Formwerkzeugs in einer Detailschnittdarstellung gezeigt, wobei lediglich ein Randbereich außerhalb einer Kavität dargestellt ist. Zwischen den beiden Formwerkzeughälften 10, 12 ist ein Einlegerteil 14 sowie eine Haut 16 eingelegt, zwischen denen im Kavitätsbereich ein Schaummaterial, beispielsweise ein Polyurethan-Material, eingefüllt wird.

Im Randbereich des Formwerkzeugs gemäß Fig. 1 sind eine Dichteinrichtung sowie eine Vakuumeinrichtung vorgesehen, wobei beide Einrichtungen die Kavität zumindest teilweise umlaufen. Dabei ist in einer Nut 15 der Formwerkzeughälfte 12 ein aufblasbarer Dichtschlauch 18 aufgenommen. Der aufblasbare Dichtschlauch 18 ist mit einer bestimmten Länge vorkonfektioniert und besitzt einen Luftanschluss 20, über den Druckluft in den Innenraum des Dichtschlauchs 18 zugeführt werden kann. Durch Zuführen von Druckluft kann der Dichtschlauch 18 aufgeblasen werden, wodurch je nach angelegtem Druck mit einer entsprechenden Intensität die Haut 16 gegen das Einlegerteil 14 gedruckt wird, so dass eine sichere und vollständige Abdichtung eines geschlossenen Formwerkzeugs auch mit eingelegter Haut 16 bzw. Einlegerteil 14 erreicht ist, die ein Austreten von Schaummaterial während des Injektionsvorgangs verhindert.

Wie insbesondere in Figur 2, die einen Schnitt entlang Linie A-A aus Figur 1 zeigt, zu erkennen ist, ist zwischen dem Dichtschlauch 18 und der inneren Wandung der Nut 15 ein Spalt 22 radial innerhalb des Dichtschlauchs ausgebildet. Dieser Spalt 22 kann über einen (nicht dargestellten) Anschluss evakuiert werden, so dass bei entsprechender obiger Abdeckung des Spalts 22 ein Vakuum gebildet werden kann. Wird nun die Haut 16 in die Kavität eingelegt und deckt den Spalt 22 oben dichtend ab, so kann durch Anlegen eines Vakuums die Haut 16 in diesem Bereich fixiert werden und zusätzlich gegen die obere Fläche des Dichtschlauchs 15 gedrückt werden. Damit kann die Haut nach dem Einlegen in die Formhälfte 12 nicht mehr verrutschen.

In der Draufsicht der Figur 3 ist der Dichtspalt 22 ebenfalls zu erkennen, wobei zwischen verschiedenen Bereichen Abstützstellen 23 ausgebildet sind, die verhindern, dass der Dichtschlauch 18 vollständig in Richtung der inneren Wand der Nut 15 gedrückt wird, wodurch der Vakuumspalt verschwinden würde. Die Ausgestaltung des Dichtschlauchs bzw. der Abstützstellen muss natürlich so gewählt werden, dass trotz dem Erzeugen des Vakuums im Spalt 22 unter zusätzlichem Aufblasen des Dichtschlauchs 18 der Spalt 22 fortwährend ausgebildet bleibt, so dass die Haltewirkung auf die Haut 16 kontinuierlich besteht.

Allerdings ist festzustellen, dass die Haut insbesondere in dem Zeitraum vom Einlegen der Haut bis zum Schließen des Formwerkzeugs und Aufblasen des Dichtschlauchs fixiert werden muss. Besonders in diesem Zeitbereich kann sich die Haut 16 verschieben. Ist das Formwerkzeug 10, 12 einmal geschlossen und der Dichtschlauch 18 aufgeblasen, so wird auch dadurch eine Fixierung der Haut 16 erreicht. Dies bedeutet, dass man beim starken Aufblasen des Dichtschlauches durchaus auch ein Verschwinden des Spaltes 22 in Kauf nehmen könnte.

Insgesamt bietet die vorliegende Erfindung den Vorteil, dass die Dicht- und Halteeinrichtung insgesamt näher zur Kevität hin angeordnet sein können, wodurch Einlegerteile oder Häute geringer dimensionierbar und damit kostengünstiger herzustellen sind. Auch führt die Kombination von Vakuumeinrichtung und Dichteinrichtung zu einer Reduktion der Herstellkosten für das Formwerkzeug selbst. So muss beim vorliegenden Ausführungsbeispiel lediglich eine Nut, die gegenüber der bisherigen Nut etwas vergrößert ausgebildet ist, in eine Formwerkzeughälfte eingebracht werden. Vormals waren dafür zwei Nuten notwendig.

## Patentansprüche

1. Abdichtbares Formwerkzeug umfassend eine erste Formhälfte (10), eine zweite Formhälfte (12), die mit der ersten Formhälfte (10) unter Ausbildung einer Kavität verschließbar ausgebildet ist, eine zwischen der ersten (10) und der zweiten Formhälfte (12) im geschlossenen Zustand wirksamen und zumindest teilweise in einer Nut (15) aufgenommene Dichteinrichtung (18), wobei die Formhälften (10, 12) derart ausgebildet sind, dass zwischen ihnen ein Einlegerteil (14, 16) positionierbar ist, wobei integral mit der Dichteinrichtung (18) eine Vakuumeinrichtung (22) zum Fixieren des Einlegerteils (14, 16) vorgesehen ist, wobei
zwischen der Nut (15) und der Dichteinrichtung (18) ein bis zum Einlegerteil reichender Spalt (22) ausgebildet ist, in dem ein auf das Einlegerteil wirksames Vakuum generierbar ist, **dadurch gekennzeichnet, dass** die Dichteinrichtung (18) und/oder die Nut (15) derart ausgebildet sind, dass auch bei Erzeugen des Vakuums der bis zum Einlegerteil reichende Spalt (22) fortwährend ausgebildet bleib, wobei
Mittel vorgesehen sind, um die Dichteinrichtung, insbesondere den Dichtschlauch (18), von der Nutwand zur Ausbildung des Spaltes zu beabstanden.

2. Abdichtbares Formwerkzeug nach Anspruch 1,
**dadurch gekennzeichnet,**
**dass** in der Nut (15) Abstützstellen (23) ausgebildet sind.

3. Abdichtbares Formwerkzeug nach einem der Ansprüche 1 bis 2,
**dadurch gekennzeichnet,**
**dass** die Dichteinrichtung einen Dichtschlauch (18) umfasst.

4. Abdichtbares Formwerkzeug nach einem der Ansprüche 1 bis 3,
**dadurch gekennzeichnet,**
**dass** der Dichtschlauch (18) einen Anschluss (20) aufweist und aufblasbar ausgebildet ist.

5. Abdichtbares Formwerkzeug nach einem der vorhergehenden Ansprüche,
**dadurch gekennzeichnet,**
**dass** die Dichteinrichtung (18) eine Kavität im wesentlichen vollständig umgibt.

6. Abdichtbares Formwerkzeug nach einem der vorhergehenden Ansprüche,
**dadurch gekennzeichnet,**
**dass** die Dichteinrichtung (18) vorkonfektioniert ist.

7. Abdichtbares Formwerkzeug nach einem der vorhergehenden Ansprüchen,
**dadurch gekennzeichnet,**
**dass** die Dichteinrichtung, insbesondere der Dichtschlauch (18), aus einem vulkanisierten Material besteht.

8. Abdichtbares Formwerkzeug nach einem der vorhergehenden Ansprüche,
**dadurch gekennzeichnet,**
**dass** eine Vakuum-Nut (22) in die Nut (15) zur zumindest teilweise Aufnahme der Dichteinrichtung, insbesondere eines Dichtschlauches (18), integriert ist.

## Claims

1. Sealable moulding tool comprising a first mould half (10), a second mould half (12) which is constructed so as to be able to be closed with the first mould half (10) with the formation of a cavity, a sealing arrangement (18) which is effective between the first (10) and the second mould half (12) in the closed state and is held at least partially in a groove (15), wherein the mould halves (10, 12) are constructed such that an insert part (14, 16) is able to be positioned between them, wherein integrally with the sealing arrangement (18) a vacuum arrangement (22) is provided for fixing the insert part (14, 16), wherein between the groove (15) and the sealing arrangement (18) a gap (22) is formed, extending up to the insert part, in which gap a vacuum acting on the insert part is able to be generated,
**characterized in that**
the sealing arrangement (18) and/or the groove (15) are constructed such that also on generating the vacuum the gap (22) extending up to the insert part remains formed continually, wherein means are provided in order to space the sealing arrangement, in particular the sealing hose (18), from the groove wall to form the gap.

2. Sealable moulding tool according to Claim 1,
**characterized in that**
support sites (23) are formed in the groove (15).

3. Sealable moulding tool according to one of Claims 1 to 2,
**characterized in that**
the sealing arrangement comprises a sealing hose (18).

4. Sealable moulding tool according to one of Claims 1 to 3,
**characterized in that**
the sealing hose (18) has a connection (20) and is constructed so as to be inflatable.

5. Sealable moulding tool according to one of the preceding claims,
**characterized in that**
the sealing arrangement (18) surrounds a cavity substantially completely.

6. Sealable moulding tool according to one of the preceding claims,
**characterized in that**
the sealing arrangement (18) is pre-assembled.

7. Sealable moulding tool according to one of the preceding claims,
**characterized in that**
the sealing arrangement, in particular the sealing hose (18), consists of a vulcanized material.

8. Sealable moulding tool according to one of the preceding claims,
**characterized in that**
a vacuum groove (22) is integrated into the groove (15) for the at least partial reception of the sealing arrangement, in particular of a sealing hose (18).

## Revendications

1. Outil de formage pouvant être étanchéifié comprenant une première moitié de moule (10), une deuxième moitié de moule (12) qui peut être fermée avec la première moitié de moule (10) en formant une cavité, un dispositif d'étanchéité (18) actif entre les première (10) et deuxième moitiés de moule (12) à l'état fermé et reçu au moins partiellement dans une rainure (15), sachant que les moitiés de moule (10, 12) sont ainsi formées qu'entre elles, une pièce d'insertion (14, 16) peut être positionnée, sachant qu'un dispositif de vide (22) est prévu intégralement avec le dispositif d'étanchéité (18) pour fixer la pièce d'insertion (14, 16), sachant qu'entre la rainure (15) et le dispositif d'étanchéité (18), une fente (22) allant jusqu'à la pièce d'insertion est formée dans laquelle un vide agissant sur la pièce d'insertion peut être généré,
**caractérisé en ce que**
le dispositif d'étanchéité (18) et/ou la rainure (15) sont ainsi formés que même lorsque du vide est produit, la fente (22) allant jusqu'à la pièce d'insertion reste continuellement formée, sachant que des moyens sont prévus pour écarter le dispositif d'étanchéité, en particulier le boyau d'étanchéité (18), de la paroi de la rainure afin de former la fente.

2. Outil de formage pouvant être étanchéifié selon la revendication 1,
**caractérisé en ce que**
des points d'appui (23) sont formés dans la rainure (15).

3. Outil de formage pouvant être étanchéifié selon l'une des revendications 1 à 2,
**caractérisé en ce que**
le dispositif d'étanchéité comprend un boyau d'étanchéité (18).

4. Outil de formage pouvant être étanchéifié selon l'une des revendications 1 à 3,
**caractérisé en ce que**
le boyau d'étanchéité (18) présente un raccord (20) et peut être gonflé.

5. Outil de formage pouvant être étanchéifié selon l'une des revendications précédentes,
**caractérisé en ce que**
le dispositif d'étanchéité (18) entoure une cavité essentiellement complètement.

6. Outil de formage pouvant être étanchéifié selon l'une des revendications précédentes,
**caractérisé en ce que**
le dispositif d'étanchéité (18) est surmoulé.

7. Outil de formage pouvant être étanchéifié selon l'une des revendications précédentes,
**caractérisé en ce que**
le dispositif d'étanchéité, en particulier le boyau d'étanchéité (18), est en matériau vulcanisé.

8. Outil de formage pouvant être étanchéifié selon l'une des revendications précédentes,
**caractérisé en ce qu'**
une rainure sous-vide (22) est intégrée dans la rainure (15) pour recevoir au moins partiellement le dispositif d'étanchéité, en particulier un boyau d'étanchéité (18).
